# EUROPÄISCHE PATENTANMELDUNG

(11) **EP 4 585 965 A1**
(43) Veröffentlichungstag der Anmeldung: **16.07.2025**
(21) Anmeldenummer: 24217974.5
(22) Anmeldetag: 06.12.2024
(51) Int. Cl.: G01S 7/481, G01S 7/484, G01S 7/4863, G01S 17/89

(54) **BELEUCHTUNGSEINRICHTUNG FÜR EINEN OPTOELEKTRONISCHEN SENSOR ZUM ERFASSEN VON OBJEKTEN IN EINEM ÜBERWACHUNGSBEREICH UND OPTOELEKTRONISCHER SENSOR**

(30) Priorität: 09.01.2024 DE 102024100400
(71) Anmelder: SICK AG, 79183 Waldkirch (DE)
(72) Erfinder: BÖDEWADT, Jörn, 20144 Hamburg (DE)
(74) Vertreter: Manitz Finsterwald Patent- und Rechtsanwaltspartnerschaft mbB

(57) **Zusammenfassung**

Die vorliegende Erfindung betrifft eine Beleuchtungseinrichtung für einen optoelektronischen Sensor, welcher zum Erfassen von Objekten in einem Überwachungsbereich eingerichtet ist, mit einer Lichtsenderanordnung, welche zum Aussenden von Sendelicht in den Überwachungsbereich eingerichtet ist und zumindest eine Lichtquelle (10) umfasst, mit einer Sendeoptikanordnung, welche zumindest eine Sendeoptik (12) umfasst und zum Fokussieren des Sendelichts eingerichtet ist, und mit einer Diffusoranordnung, welche zumindest einen Lineardiffusor (16) umfasst und dazu eingerichtet ist, das fokussierte Sendelicht in einer ersten Raumrichtung zu streuen und in einer zweiten, zur ersten Raumrichtung orthogonalen, Raumrichtung zumindest im Wesentlichen ungestreut zu lassen. Die Lichtsenderanordnung, die Sendeoptikanordnung und die Diffusoranordnung sind ausgebildet, ein auf einem im Überwachungsbereich anwesenden Objekt ein streifenförmiges Sendelichtmuster zu erzeugen, welches mehrere Lichtlinien umfasst. Erfindungsgemäß ist vorgesehen, dass eine Wirkzone der Diffusoranordnung eine Krümmung aufweist, welche derart ausgestaltet ist, dass ein Referenz-Sendelichtmuster, welches bei Erzeugen mittels einer Referenz-Diffusoranordnung mit planer Wirkzone im Winkelraum geradlinig verlaufende Lichtlinien umfassen würde, derart verzeichnet wird, dass die Lichtlinien im Winkelraum einen gekrümmten, verzeichneten Verlauf aufweisen.

## Beschreibung

Die vorliegende Erfindung betrifft eine Beleuchtungseinrichtung für einen optoelektronischen Sensor, welcher zum Erfassen von Objekten in einem Überwachungsbereich eingerichtet ist, mit einer Lichtsenderanordnung, welche zum Aussenden von Sendelicht in den Überwachungsbereich eingerichtet ist und zumindest eine Lichtquelle umfasst, mit einer Sendeoptikanordnung, welche zumindest eine Sendeoptik umfasst und zum Fokussieren des Sendelichts eingerichtet ist, und mit einer Diffusoranordnung, welche zumindest einen Lineardiffusor umfasst und dazu eingerichtet ist, das fokussierte Sendelicht in einer ersten Raumrichtung zu streuen und in einer zweiten, zur ersten Raumrichtung orthogonalen, Raumrichtung zumindest im Wesentlichen ungestreut zu lassen. Die Lichtsenderanordnung, die Sendeoptikanordnung und die Diffusoranordnung sind ausgebildet, ein auf einem im Überwachungsbereich anwesenden Objekt ein streifenförmiges Sendelichtmuster zu erzeugen, welches mehrere Lichtlinien umfasst.

Bei optoelektronischen Sensoren, welche nach dem Prinzip eines Lichttasters funktionieren, befinden sich die Beleuchtungseinrichtung und eine zur Detektion von Empfangslichtsignalen vorgesehene Empfangsanordnung auf derselben Seite des Überwachungsbereichs. Falls ein Objekt im Überwachungsbereich anwesend ist, wird das von der Lichtsenderanordnung ausgesendete Sendelicht an der Oberfläche des Objekts in Richtung der Empfangsanordnung remittiert, d.h. diffus oder spiegelnd reflektiert. Für eine ortsaufgelöste Erfassung von Objekten kann die Empfangsanordnung einen Lichtempfänger mit einem eindimensionalen oder zweidimensionalen Array von lichtempfindlichen Empfangselementen und eine Empfangsoptik aufweisen, wobei beispielsweise eine ortsaufgelöste Erfassung eines Abbilds des von der Beleuchtungseinrichtung auf das Objekt projizierten Sendelichtmusters erfolgen kann. Lichtempfänger mit einem zweidimensionalen Array von lichtempfindlichen Empfangselementen weisen üblicherweise eine matrixförmige, rechtwinklige und äquidistante Anordnung von Empfangselementen mit mehreren Zeilen auf.

In verschiedenen Anwendungsfällen ist es wünschenswert, eine Ortsauflösung nicht nur in ein oder zwei lateralen Dimensionen erhalten zu können, sondern als weitere Dimension auch eine Abstands- oder Tiefeninformation bezüglich des erfassten Objekts ermitteln zu können. Derartige abstandsmessende optische Sensoren oder abstandsmessende Lichttaster werden auch als LIDAR-Sensoren oder LIDAR-Systeme (LIDAR: Abkürzung für Englisch "Light Detecting And Ranging") bezeichnet. Für diesen Typ von Sensoren werden oftmals spezielle Lichtempfänger eingesetzt, welche beispielsweise dazu eingerichtet sind, die Abstandsinformationen nach dem Lichtlaufzeitverfahren zu ermitteln. Derartige Lichtempfänger oder Sensorarrays werden auch als TOF-Sensoren (TOF: Abkürzung für Englisch "Time Of Flight" als Synonym für die Lichtlaufzeit) bezeichnet. TOF-Sensoren sind dazu eingerichtet, die Laufzeit eines Lichtpulses zwischen dem Zeitpunkt seiner Aussendung und dem Zeitpunkt der Erfassung des korrespondierenden am Objekt reflektierten Lichtpulses zu erfassen, und zwar separat für jedes lichtempfindliche Element des TOF-Sensors.

Oftmals lassen sich derartige TOF-Sensoren nur zeilenweise auslesen, d.h. es kann immer nur eine Zeile von lichtempfindlichen Elementen des TOF-Sensors zu einem bestimmten Zeitpunkt ausgewertet werden. Zum Erzielen einer im Vergleich zu einer vollflächigen Ausleuchtung des Überwachungsbereichs höheren Energieeffizienz bei der Erzeugung des Sendelichts und auch zur Vermeidung von unerwünschten Übersprecheffekten ist es wünschenswert, nur diejenigen Bereiche des Überwachungsbereichs bzw. der Oberfläche eines zu erfassenden Objekts auszuleuchten, die aufgrund der Geometrie im Empfangslichtpfad tatsächlich auch von der jeweiligen aktiven Zeile des Lichtempfängers erfasst werden können. Aus diesem Grund wird die Lichtsenderanordnung so konfiguriert und betrieben, dass ein streifenförmiges Sendelichtmuster erzeugt wird, welches mehrere Lichtlinien umfasst, wobei hierfür die Abbildungseigenschaften der Lichtsenderanordnung und der Empfangsanordnung so aufeinander abgestimmt werden, dass eine jeweilige Lichtlinie des Sendelichtmusters möglichst zentriert auf eine Zeile des Lichtempfängers abgebildet wird. Die Erzeugung der mehreren Lichtlinien erfolgt beispielsweise sequentiell durch aufeinanderfolgendes Aktivieren der einzelnen Lichtquellen der Lichtsenderanordnung.

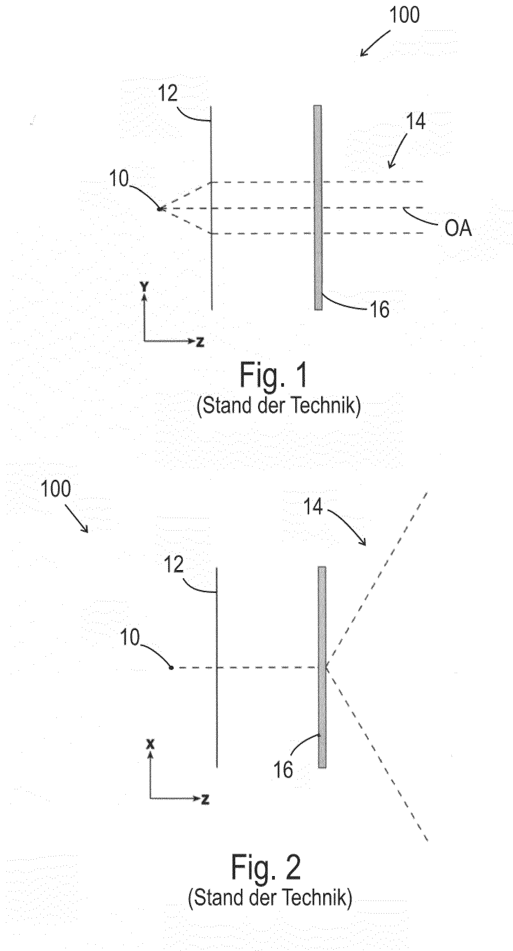

Die der Erfindung zugrundeliegende Problematik bei einer Erzeugung eines streifenförmigen Sendelichtmusters mittels einer herkömmlichen Beleuchtungseinrichtung wird nachfolgend mit Bezug auf Fig. 1 bis 4 erläutert.

Gemäß der schematischen Fig. 1 und 2 kann die Erzeugung einer einzelnen Lichtlinie mittels einer Beleuchtungseinrichtung 100 erfolgen, bei welcher einer Punktlichtquelle 10 eine Sendeoptik 12 nachgeordnet ist, welche das von der Punktlichtquelle 10 emittierte divergente Sendelicht zu einem parallelen Lichtbündel 14 formt. Der Sendeoptik 12 ist eine Diffusoranordnung mit einem sogenannten 1D-Diffusor oder Lineardiffusor 16 nachgeordnet, welcher dieses parallele Lichtbündel 14 durch Streuung in einer ersten Raumrichtung fächerförmig aufweitet (vgl. Fig. 2: X-Richtung), während in der zweiten Raumrichtung zumindest im Wesentlichen, d.h. bis auf ein konstruktiv und fertigungstechnisch unvermeidbares Maß, keine Strahlbeeinflussung erfolgt (vgl. Fig. 1: Y-Richtung). Ein derartiger Lineardiffusor 16 kann beispielsweise als eine Platte oder eine Folie mit einer Wirkzone ausgebildet sein, welche lineare Strukturen aufweist, die die gewünschte fächerförmige Aufweitung des Lichtbündels 14 bewirken. Bei dem Lineardiffusor 16 gemäß Fig. 1 bis 3 verlaufen diese linearen Strukturen in der Y-Richtung.

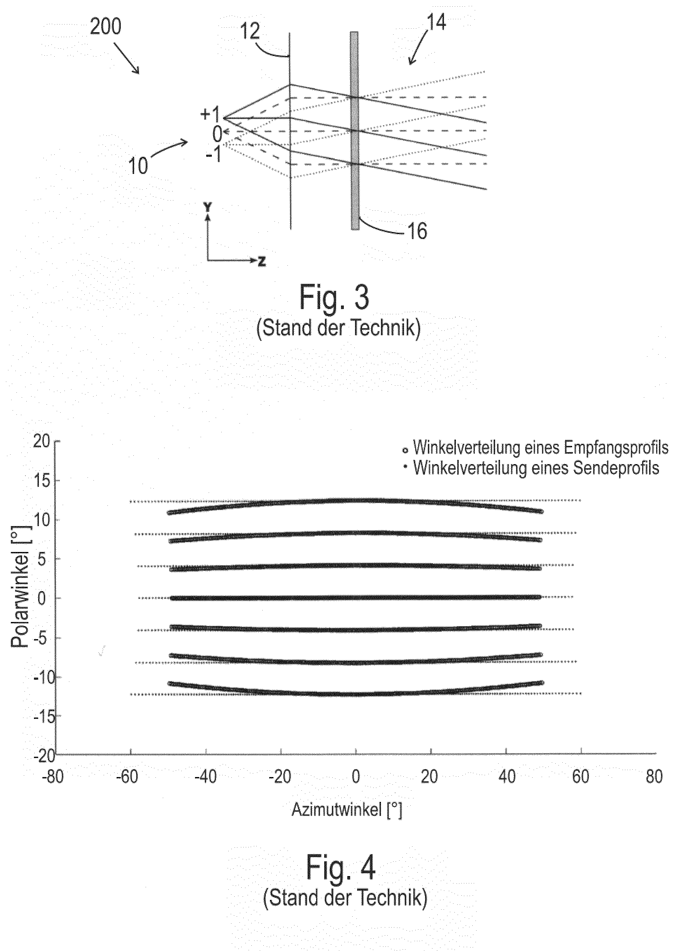

Um mehrere voneinander beabstandete Lichtlinien zu erzeugen, kann darauf basierend eine Beleuchtungseinrichtung 200 gemäß Fig. 3 mit mehreren Punktlichtquellen 10 vorgesehen werden, die lateral beabstandet voneinander angeordnet sind. Bei der Beleuchtungseinrichtung 200 sind exemplarisch drei Punktlichtquellen 10 vorgesehen, welche mit "0", "+1" und "-1" bezeichnet und in Y-Richtung voneinander beabstandet sind. Während das von der Punktlichtquelle "0" emittierte Lichtbündel 14 sich entlang der optischen Achse OA der Beleuchtungseinrichtung 200 erstreckt, verlaufen die Lichtbündel 14 der Punktlichtquellen "+1" und "-1" nach unten bzw. nach oben geneigt. Jedes dieser Lichtbündel 14 wird fächerförmig aufgeweitet, wodurch ein Sendelichtmuster erzeugt wird, welches im Winkelraum als ein Lichtmuster mit mehreren parallel verlaufenden geradlinigen Lichtlinien erscheint, was nachfolgend noch näher erläutert wird.

Ein solches Sendelichtmuster oder Sendeprofil ist in Fig. 4 exemplarisch für eine Beleuchtungseinrichtung mit sieben Punktlichtquellen dargestellt. Die Winkelverteilung des Sendeprofils, bei welcher der Polarwinkel über dem Azimutwinkel aufgetragen ist, ist durch eine Vielzahl von punktförmigen Symbolen repräsentiert, welche in Fig. 4 als dünnere Linien erscheint. Der Polarwinkel entspricht dem jeweiligen Neigungswinkel eines von einer jeweiligen Punktlichtquelle 10 emittierten Lichtbündels 14 bezogen auf die optische Achse OA und korrespondiert daher mit der Y-Position eines jeweiligen Symbols. Der Azimutwinkel entspricht einem jeweiligen Streuwinkel der fächerförmigen Aufweitung und korrespondiert daher mit der X-Position eines jeweiligen Symbols.

Für eine Abbildung dieses Sendeprofils in ein Empfangslichtmuster auf einem Lichtempfänger mit mehreren Zeilen von Empfangselementen wird bevorzugt eine Empfangsoptik verwendet, welche eine winkeltreue Abbildungsfunktion aufweist und auch als F-Theta-Linse bezeichnet wird. Die Verwendung einer derartigen Empfangsoptik führt jedoch zu einer verzeichneten Abbildung des Sendeprofils. Eine entsprechende Winkelverteilung eines solchen verzeichneten Empfangslichtmusters oder Empfangsprofils ist in Fig. 4 mit einer Vielzahl von kreisförmigen Symbolen dargestellt, welche dort als dickere Linien erscheint. Wie in Fig. 4 gut zu erkennen ist, weichen das Sendeprofil, d.h. das von der Sendeeinheit erzeugte Winkelprofil, und das Empfangsprofil signifikant voneinander ab. Aufgrund dieser Abweichung ist eine auf die Zeilen des Lichtempfängers angepasste Abbildung der Sendelichtlinien nicht mehr möglich. Insbesondere an den Rändern führt die Abweichung dazu, dass entsprechende Randabschnitte der Sendelichtlinien nicht oder nur noch teilweise auf die zugeordneten Zeilen des Lichtempfängers abgebildet werden.

Es ist die Aufgabe der Erfindung, eine Beleuchtungseinrichtung für einen optoelektronischen Sensor zu schaffen, mit welcher ein Sendelichtmuster erzeugt werden kann, welches sich auch mit einer verzeichnenden Empfangsoptik in ein aus möglichst geradlinig verlaufenden Lichtlinien bestehendes Empfangslichtmuster auf einen Lichtempfänger abbilden lässt.

Die Lösung der Aufgabe erfolgt durch eine Beleuchtungseinrichtung mit den Merkmalen des Anspruchs 1.

Erfindungsgemäß ist vorgesehen, das eine Wirkzone der Diffusoranordnung eine Krümmung aufweist, welche derart ausgestaltet ist, dass ein Referenz-Sendelichtmuster, welches bei Erzeugen mittels einer Referenz-Diffusoranordnung mit planer Wirkzone im Winkelraum geradlinig verlaufende Lichtlinien umfassen würde, derart verzeichnet wird, dass die Lichtlinien im Winkelraum einen gekrümmten, verzeichneten Verlauf aufweisen.

Unter einer Lichtlinie, welche im Winkelraum, d.h. in einem durch den Polarwinkel und den Azimutwinkel beschriebenen räumlichen Polarkoordinatensystem, geradlinigen Verlauf aufweist, wird ein jeweiliger linienförmiger Bereich verstanden, für den der Polarwinkel für unterschiedliche Azimutwinkel gleich ist. Dementsprechend wird unter einer Lichtlinie, welche im Winkelraum einen gekrümmten, verzeichneten Verlauf aufweist, ein jeweiliger linienförmiger Bereich verstanden, für den sich im Winkelraum der Polarwinkel für unterschiedliche Azimutwinkel unterscheidet.

Die Wirkzone der Diffusoranordnung entspricht bei einem einzigen Lineardiffusor der wirksamen Zone bzw. dem wirksamen Bereich, welcher die genannte Streuung in eine Raumrichtung bewirkt. Sofern die Diffusoranordnung mehrere Lineardiffusoren umfasst, setzt sich die Wirkzone der Diffusoranordnung aus den jeweiligen Wirkzonen der verschiedenen Lineardiffusoren zusammen. Die Krümmung der Wirkzone kann folglich einen kontinuierlichen oder diskreten Verlauf aufweisen, was nachfolgend noch näher erläutert wird.

Das genannte Referenz-Sendelichtmuster ist insbesondere ein virtuelles Sendelichtmuster, das hier eingeführt wird, um als Bezug bei der Beschreibung der Wirkung der Diffusoranordnungskrümmung zu dienen. Die Lichtlinien des Referenz-Sendelichtmusters (entspricht dem in Fig. 4 durch die punktförmigen Symbole repräsentierten Sendeprofil) verlaufen dabei im Winkelraum, genauer gesagt in gedachter Projektion auf eine Kugelschale des Polarkoordinatensystems, geradlinig und insbesondere auch parallel zueinander Die plane Wirkzone der Referenz-Diffusoranordnung verläuft bei dieser Betrachtung orthogonal zu der optischen Achse der Beleuchtungseinrichtung.

Der genannte gekrümmte verzeichnete Verlauf der Lichtlinien des "realen" Sendelichtmusters ist so zu verstehen, dass die Lichtlinien bzw. das Sendelichtmuster im Winkelraum, d.h. in gedachter Projektion auf eine Kugelschale des Polarkoordinatensystems, eine Verzeichnung im optischen Sinne aufweisen. Eine derartige optische Verzeichnung lässt sich insbesondere dadurch beschreiben, dass Lichtlinien durch einen geometrischen Mittelpunkt des Sendelichtmusters geradlinig verlaufen und Lichtlinien, die nicht durch den Mittelpunkt verlaufen, gekrümmt sind, wobei der Krümmungsradius einer Lichtlinie mit zunehmendem Abstand dieser Lichtlinie vom Mittelpunkt kleiner wird (d.h. die Krümmung wird mit zunehmendem Abstand stärker). Verlaufen die Lichtlinien bezogen auf den Mittelpunkt konvex gekrümmt, handelt es sich um eine kissenförmige Verzeichnung, verlaufen sie konkav gekrümmt, handelt es sich um eine tonnenförmige Verzeichnung.

Die erfindungsgemäße Ausgestaltung der Beleuchtungseinrichtung erlaubt es, den Überwachungsbereich eines optoelektronischen Sensors derart mit einem verzeichneten linienförmigen Sendelichtmuster auszuleuchten, dass dieses verzeichnete Sendelichtmuster von einer Empfangsoptik einer Empfangsanordnung als ein Empfangslichtmuster auf einem Lichtempfänger der Empfangsanordnung abgebildet werden kann, dessen Linien einen verzeichnungsfreien, weitgehend geradlinigen Verlauf aufweisen.

Grundsätzlich ist das genannte Erzeugen eines streifenförmigen Sendelichtmusters nicht ausschließlich so zu verstehen, dass alle Lichtlinien dieses Sendelichtmusters zum gleichen Zeitpunkt erzeugt werden müssen. Vielmehr wird das Sendelichtmuster bevorzugt derart erzeugt, dass die mehreren Lichtlinien auch zeitlich nacheinander, d.h. sequentiell, erzeugt werden können. Dies wird nachfolgend noch näher erläutert.

Gemäß einer bevorzugten Ausführungsform verläuft die Krümmung der Wirkzone der Diffusoranordnung in nur einer Dimension, wobei die Krümmung in einer Ebene verläuft, die von einer durch die Lichtsenderanordnung, die Sendeoptikanordnung und die Diffusoranordnung verlaufenden optischen Achse der Beleuchtungseinrichtung und der zweiten Raumrichtung aufgespannt wird. Demnach weist die Wirkzone keine sphärische Krümmung auf, sondern eine zylinderförmige Krümmung. Eine Symmetrieachse oder Mittelachse dieser zylindrischen Form der Wirkzone verläuft dementsprechend in der vorstehend genannten ersten Raumrichtung.

Vorteilhafterweise wird die Diffusoranordnung bezüglich ihrer Krümmung derart ausgerichtet, dass die genannte Symmetrieachse parallel zu den Zeilen von lichtempfindlichen Elementen einer zugeordneten Empfangsanordnung verläuft.

Gemäß einer weiteren bevorzugten Ausführungsform ist die Wirkzone der Diffusoranordnung bezogen auf ihre der Sendeoptikanordnung zugewandten Seite konkav gekrümmt. Dies führt dazu, dass das Sendelichtmuster im Winkelraum, d.h. in gedachter Projektion auf eine Kugelschale des Polarkoordinatensystems, tonnenförmig verzeichnet ist. Alternativ kann die Wirkzone der Diffusoranordnung bezogen auf ihre der Sendeoptikanordnung zugewandten Seite auch konvex gekrümmt sein. Dies führt dann dazu, dass das Sendelichtmuster im Winkelraum, d.h. in gedachter Projektion auf eine Kugelschale des Polarkoordinatensystems, kissenförmig verzeichnet erscheint. Die Wahl einer konvexen oder konkaven Krümmung der Wirkzone erfolgt bevorzugt derart, dass die Verzeichnung einer Empfangsoptik einer zugeordneten Empfangsanordnung möglichst vollständig ausgeglichen werden kann.

Gemäß einer weiteren bevorzugten Ausführungsform umfasst die Diffusoranordnung einen entsprechend der vorgesehenen Krümmung der Wirkzone der Diffusoranordnung gekrümmten Lineardiffusor. Alternativ umfasst die Diffusoranordnung eine Mehrzahl von planen Lineardiffusoren, welche entsprechend der vorgesehenen Krümmung der Wirkzone der Diffusoranordnung angeordnet und ausgerichtet sind. Es kann also die gekrümmte Wirkzone in kontinuierlicher Weise durch einen einzigen gekrümmten Lineardiffusor gebildet sein oder durch eine Aneinanderreihung einer Mehrzahl von planen Lineardiffusoren angenähert werden.

Gemäß einer weiteren bevorzugten Ausführungsform umfasst die Lichtsenderanordnung eine Mehrzahl von Lichtquellen, welche in der zweiten Raumrichtung voneinander beabstandet angeordnet sind. Bei dieser Ausgestaltung erzeugt jede Lichtquelle eine jeweilige Lichtlinie. Bevorzugt sind die mehreren Lichtquellen in einer Zeile angeordnet, wobei sich diese Zeile in der zweiten Raumrichtung erstreckt.

Bevorzugt ist die Mehrzahl von Lichtquellen sequentiell aktivierbar, wobei bevorzugt zu einem bestimmten Zeitpunkt immer nur eine Lichtquelle aktiv ist. Hierdurch wird bei einer Verwendung der Beleuchtungseinrichtung in einem abstandsmessenden optoelektronischen TOF-Sensor, bei dem aus technischen Gründen immer nur eine Zeile von Empfangselementen zu einem bestimmten Zeitpunkt aktiv sein kann, eine energetisch ineffiziente Beleuchtung von nicht erfassbaren Teilbereichen des Überwachungsbereichs vermieden.

Bevorzugt ist jeder der Lichtquellen eine jeweilige Sendeoptik zugeordnet. Dementsprechend kann die Sendeoptikanordnung als ein Lineararray oder Mikrolinsenarray von einzelnen Sendeoptiken ausgebildet sein. Alternativ kann jedoch auch eine gemeinsame Sendeoptik für alle Lichtquellen vorgesehen sein.

Ferner ist bevorzugt jeder der Lichtquellen auch ein jeweiliger Lineardiffusor einer Mehrzahl von planen Lineardiffusoren zugeordnet. Grundsätzlich können die Ausgestaltungen mit mehreren Lichtquellen und/oder die Ausgestaltungen mit einer oder mehreren Sendeoptiken auch mit einer Ausgestaltung der Diffusoranordnung mit einem gekrümmten Lineardiffusor kombiniert werden.

Die vorliegende Erfindung betrifft ferner einen optoelektronischen Sensor zum Erfassen von Objekten in einem Überwachungsbereich, welcher eine erfindungsgemäße Beleuchtungseinrichtung und eine Empfangsanordnung umfasst, welche einen Lichtempfänger, welcher eine Vielzahl von in Zeilen und Spalten angeordneten lichtempfindlichen Empfangselementen aufweist, und eine Empfangsoptik umfasst, welche zum Abbilden eines Sendelichtmusters, welches von der Beleuchtungseinrichtung auf einem im Überwachungsbereich anwesenden Objekt erzeugt wurde, in ein Empfangslichtmuster auf dem Lichtempfänger eingerichtet ist. Der Lichtempfänger und die Empfangsoptik sind derart ausgestaltet und angeordnet, dass eine jeweilige Lichtlinie des Sendelichtmusters auf einer jeweiligen Zeile des Lichtempfängers abgebildet wird.

Mit diesem optoelektronischen Sensor kann der Erfindungsgedanke vorteilhaft umgesetzt werden, wobei durch die erfindungsgemäße Ausgestaltung der Diffusoranordnung eine durch die Empfangsoptik der Empfangsanordnung verursachte optische Verzeichnung zumindest weitgehend ausgeglichen wird. Dadurch wird erreicht, dass die Linien eines durch Abbildung des Sendelichtmusters erzeugten Empfangslichtmusters auf dem Lichtempfänger mit den jeweiligen Zeilen von lichtempfindlichen Empfangselementen weitgehend übereinstimmen und damit auch das auftreffende Licht in Randbereichen des Lichtempfängers annähernd vollständig erfasst werden kann. Es wird somit vermieden, dass aufgrund einer unerwünschten Krümmung der Empfangslinien die Sensitivität des optoelektronischen Sensors zumindest für Teilbereiche in unerwünschter Weise reduziert ist.

Gemäß einer bevorzugten Ausführungsform des optoelektronischen Sensors ist die Krümmung der Wirkzone der Diffusoranordnung und/oder der Abstand der Diffusoranordnung von der Sendeoptikanordnung derart gewählt, dass die durch die Diffusoranordnung bewirkte Verzeichnung des Sendelichtmusters einer durch die Empfangsoptik bewirkten Verzeichnung des Empfangslichtmusters entgegenwirkt. Bevorzugt gleicht die durch die Diffusoranordnung bewirkte Verzeichnung des Sendelichtmusters die durch die Empfangsoptik bewirkte Verzeichnung des Empfangsmusters zumindest im Wesentlichen vollständig aus. Somit weist das Empfangslichtmuster Empfangslinien auf, die im Wesentlichen geradlinig verlaufen.

Die hier verwendeten Ausdrücke "zumindest im Wesentlichen" bzw. "im Wesentlichen" sind hier so zu verstehen, dass der Ausgleich der Verzeichnung im Rahmen des konstruktiv bzw. fertigungstechnisch möglichen erfolgt. Die fertigungstechnisch oder konstruktiv bedingten Abweichungen von einem idealen geradlinigen Verlauf oder auch Abweichungen, die beispielsweise durch Krümmungen der Oberfläche eines realen Objekts verursacht werden, können toleriert werden. Das Wählen der Krümmung umfasst insbesondere gegebenenfalls sowohl das Wählen einer geeigneten Krümmungsrichtung, d.h. die Wahl einer konvexen oder konkaven Krümmung, als auch gegebenenfalls das Wählen eines geeigneten Krümmungsradius. Das Wählen des Abstands der Diffusoranordnung von der Sendeoptikanordnung kann insbesondere auch das Einstellen eines gewünschten Arbeitsabstands des Sensors umfassen.

Gemäß einer weiteren bevorzugten Ausführungsform des optoelektronischen Sensors ist eine Auswerteeinrichtung vorgesehen, welche mit der Lichtsenderanordnung und dem Lichtempfänger verbunden ist, wobei die Lichtsenderanordnung eine Mehrzahl von sequentiell durch die Auswerteeinheit aktivierbaren Lichtquellen umfasst, welche in der zweiten Raumrichtung voneinander beabstandet angeordnet sind, wobei jeder Lichtquelle eine entsprechende Zeile des Lichtempfängers zugeordnet ist, wobei die Auswerteeinrichtung dazu eingerichtet ist, den Abstand eines Auftrefforts des Sendelichtmusters auf einer Oberfläche des Objekts auf der Grundlage der Lichtlaufzeit zwischen einem jeweils aktivierten Lichtquelle und einem lichtempfindlichen Element der zugeordneten Zeile des Lichtempfängers ortsaufgelöst zu ermitteln. Der hierdurch definierte optoelektronische Sensor ist somit zum abstandsmessenden Erfassen von Objekten nach dem Prinzip eines LIDAR-Systems eingerichtet.

Weitere Vorteile der erfindungsgemäßen Beleuchtungseinrichtung und des erfindungsgemäßen optoelektronischen Sensors und vorteilhafte Ausführungsformen ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird diese Merkmale zweckmäßigerweise auch einzeln betrachten und zu sinnvollen weiteren Kombinationen zusammenfassen.

### Es zeigen:

- Fig. 1 bis 3: schematische, nicht maßstäbliche Querschnittsdarstellungen von Beleuchtungseinrichtungen gemäß dem Stand der Technik,
- Fig. 4: ein Diagramm, welches Winkelverteilungen eines Empfangsprofils bzw. eines Sendeprofils eines optoelektronischen Sensors gemäß dem Stand der Technik darstellt,
- Fig. 5 und 6: schematische, nicht maßstäbliche Querschnittsdarstellungen einer Beleuchtungseinrichtung gemäß einem Ausführungsbeispiel, welches einen Teil der Merkmale der vorliegenden Erfindung aufweist,
- Fig. 7: ein Diagramm, welches Winkelverteilungen von Sendeprofilen einer Beleuchtungseinrichtung gemäß Fig. 5 und 6 für verschiedene Kippwinkel des Lineardiffusors darstellt,
- Fig. 8: eine schematische, nicht maßstäbliche Querschnittsdarstellung einer Beleuchtungseinrichtung gemäß einem weiteren Ausführungsbeispiel, welches einen Teil der Merkmale der vorliegenden Erfindung aufweist,
- Fig. 9: ein Diagramm, welches eine Winkelverteilung eines Sendeprofils einer Beleuchtungseinrichtung gemäß Fig. 8 darstellt,
- Fig. 10: eine schematische, nicht maßstäbliche Querschnittsdarstellung einer Beleuchtungseinrichtung gemäß einem erfindungsgemäßen Ausführungsbeispiel, und
- Fig. 11: ein Diagramm, welches Winkelverteilungen von Sendeprofilen der Beleuchtungseinrichtung von Fig. 10 für verschiedene Abstände einer Diffusoranordnung von einer Sendeoptikanordnung darstellt.

Im Folgenden werden für gleiche oder gleichartige Elemente die gleichen Bezugszeichen verwendet.

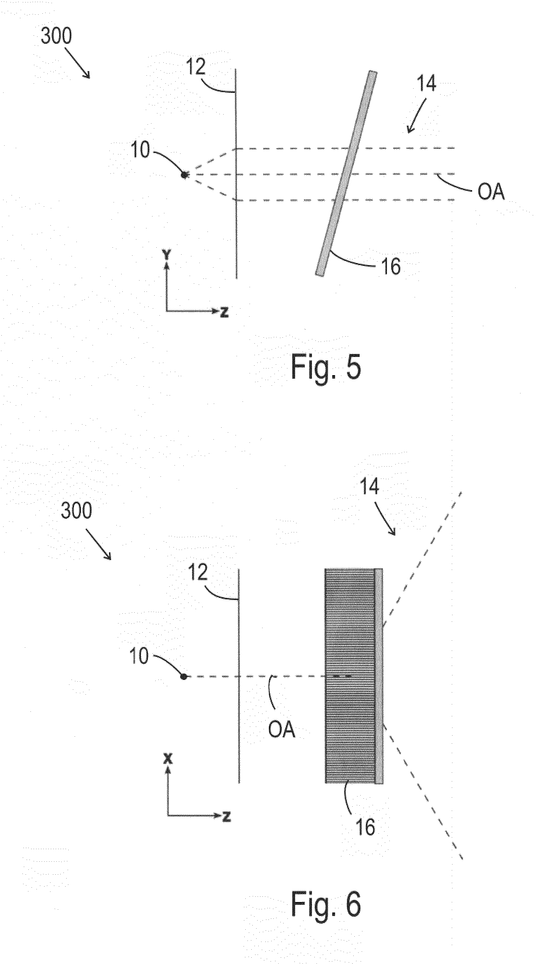

Fig. 5 und 6 zeigen schematische Querschnittsdarstellungen einer Beleuchtungseinrichtung 300 gemäß einem Ausführungsbeispiel, welches zwar nicht alle Merkmale der vorliegenden Erfindung aufweist, jedoch dem besseren Verständnis der Erfindung dient. Die Beleuchtungseinrichtung 300 ähnelt der Beleuchtungseinrichtung 100 von Fig. 1 und 2, so dass hier nur auf die wesentlichen Unterschiede eingegangen wird. In Fig. 5, die eine Seitenansicht der Beleuchtungseinrichtung 300 darstellt, ist der Lineardiffusor 16 im Vergleich zur korrespondierenden Fig. 1 geneigt gegenüber der optischen Achse OA angeordnet, welche durch die Punktlichtquelle 10, den Mittelpunkt der Sendeoptik 12 und den Lineardiffusor 16 verläuft und mit einem Strahl des Sendelichtbündels 14 zusammenfällt, wobei die Achse der Neigung oder Verkippung des Lineardiffusors 16 in der X-Richtung und somit quer zu den linearen Strukturen des Lineardiffusors 16 bzw. dessen Wirkzone verläuft. Dementsprechend erscheint der Lineardiffusor 16 in Fig. 6, welche eine Draufsicht der in Fig. 5 in Seitenansicht dargestellten Beleuchtungseinrichtung 300 zeigt, in Z-Richtung ausgedehnt, wobei die in Z-Richtung verlaufenden Streifen im Inneren des Lineardiffusors 16 die linienförmigen, streuenden Strukturen des Lineardiffusors 16 darstellen.

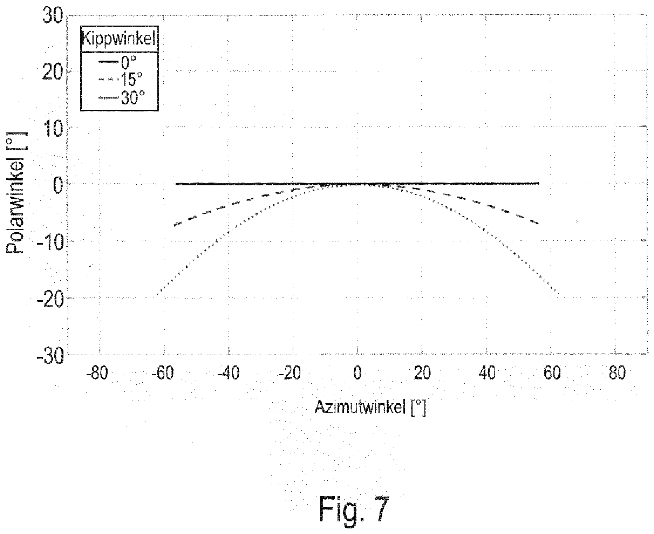

In dem Diagramm von Fig. 7 sind Winkelverteilungen von drei Sendeprofilen dargestellt, welche von einer Beleuchtungseinrichtung 300 für verschiedene Kippwinkel des Lineardiffusors 16 erzeugt wurden, wobei sich die Kippwinkel auf eine Verkippung gegenüber einer Vertikalen zur optischen Achse OA beziehen. Da die Beleuchtungseinrichtung 300 (Fig. 5 und 6) im betrachteten Beispiel vereinfachend nur eine Punktlichtquelle 10 aufweist, besteht jedes der drei Sendeprofile aus nur einer Lichtlinie. Während die durchgezogen dargestellte Lichtlinie des Sendelichtprofils für einen Kippwinkel von 0° (korrespondierend zu der Beleuchtungseinrichtung 100 von Fig. 1 und 2 mit einem vertikal zur optischen Achse OA ausgerichteten Lineardiffusor 16) einen geradlinigen Verlauf aufweist, sind für von 0° verschiedene Kippwinkel die Verläufe der gestrichelt bzw. punktiert dargestellten Lichtlinien gekrümmt, wobei die Krümmung umso größer ist, je größer der Kippwinkel ist. Somit ist für einen Kippwinkel von 15° die Krümmung schwächer (d.h. der Krümmungsradius größer) als bei einem Kippwinkel von 30°.

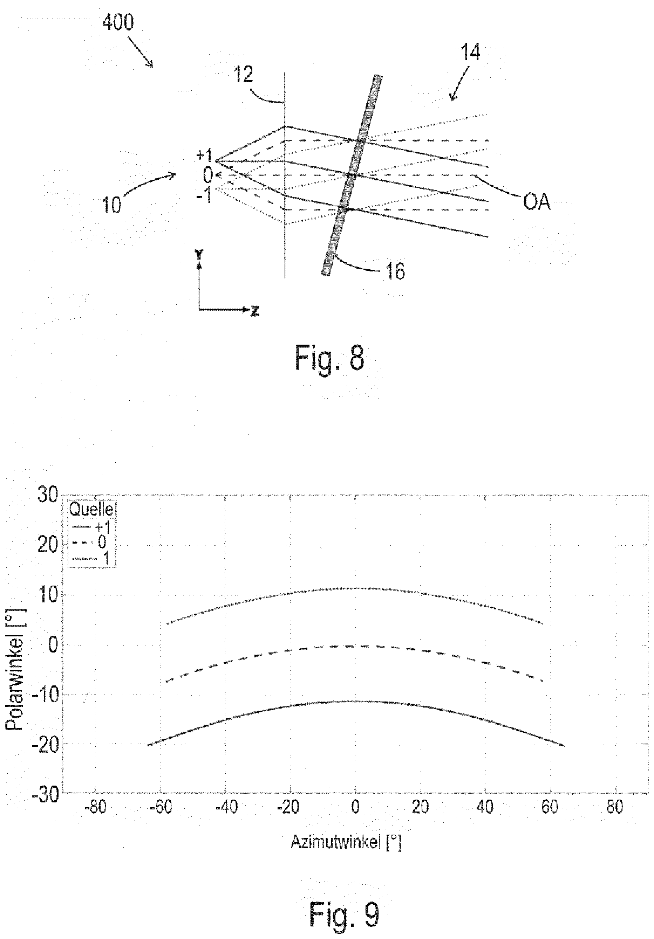

Fig. 8 zeigt eine Beleuchtungseinrichtung 400 gemäß einem weiteren Ausführungsbeispiel, welches ebenfalls nicht alle Merkmale der Erfindung zeigt und desgleichen dem besseren Verständnis der Erfindung dienen soll. Die Beleuchtungseinrichtung 400 von Fig. 8 entspricht im Prinzip einer Kombination der Beleuchtungseinrichtung 200 (Fig. 3) mit der Beleuchtungseinrichtung 300 (Fig. 5 und 6). Dementsprechend weist die Beleuchtungseinrichtung 400 von Fig. 8 insgesamt drei Punktlichtquellen 10 auf, welche mit "+1", "0" und "-1" gekennzeichnet sind. Der Lineardiffusor 16 ist ähnlich wie beim Ausführungsbeispiel gemäß Fig. 5 und 6 gegenüber der optischen Achse OA geneigt angeordnet, d.h. gegenüber einer Vertikalen zur optischen Achse OA verkippt.

Die Winkelverteilung eines von der Beleuchtungseinrichtung 400 (Fig. 8) erzeugten Sendeprofils sind in Fig. 9 dargestellt. Die Linierungen der drei Lichtlinien dieser Winkelverteilung in Fig. 9 entsprechen den Linierungen der Lichtstrahlen des Sendelichtbündels 14 in Fig. 8, d.h. die durchgezogenen Linien korrespondieren zu der Punktlichtquelle "+1", die gestrichelten Linien zu der Punktlichtquelle "0" und die punktierten Linien zu der Punktlichtquelle "-1". Wie in Fig. 9 gut zu erkennen ist, weisen alle Lichtlinien die gleiche Krümmung bzw. den gleichen Krümmungsradius auf.

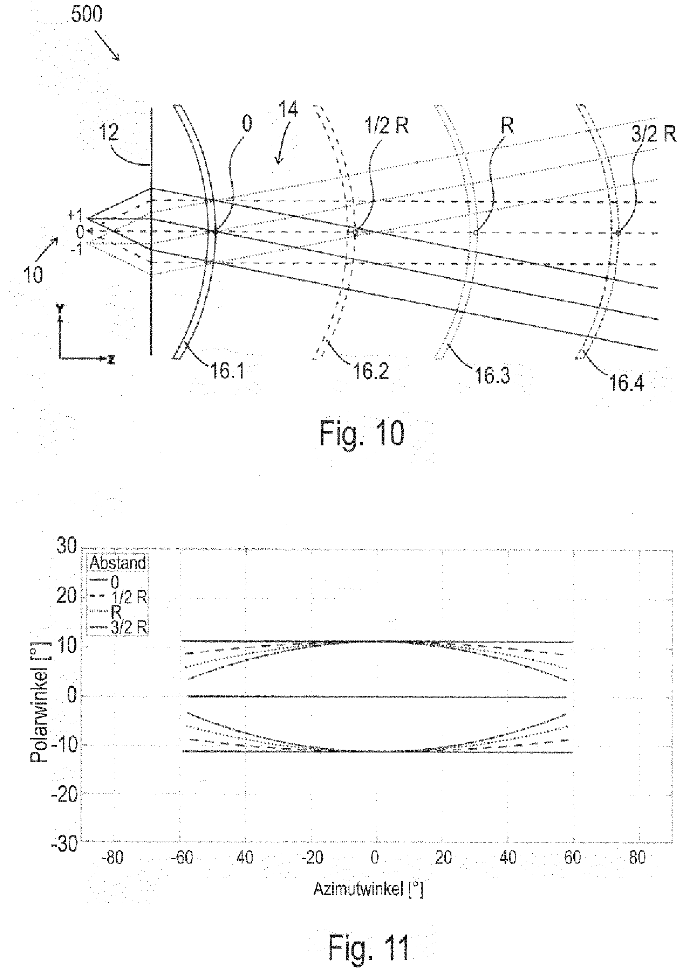

Fig. 10 zeigt eine Beleuchtungseinrichtung 500 gemäß einem erfindungsgemäßen Ausführungsbeispiel. Die Beleuchtungseinrichtung 500 ähnelt der Beleuchtungseinrichtung 400 (Fig. 8), wobei der Lineardiffusor 16 bzw. eine Wirkzone des Lineardiffusors 16 einen gekrümmten Verlauf aufweist. Die Symmetrieachse dieser Krümmung verläuft in der X-Richtung. In Fig. 10 ist der Lineardiffusor 16 in vier verschiedenen Abständen von der Sendeoptik 12 dargestellt und entsprechend mit den Bezugszeichen 16.1 bis 16.4 versehen, wobei dort die Werte des Abstands als Relativabstände bezogen auf einen Brennpunkt der Sendeoptik 12 und einen Krümmungsradius R des Lineardiffusors 16 angegeben sind. Während sich der liniert dargestellte Lineardiffusor 16.1 im Bereich des Brennpunkts der Sendeoptik 12 befindet und somit den Abstand 0 aufweist, ist der gestrichelt dargestellte Lineardiffusor 16.2 an einer Position vorgesehen, welche vom Brennpunkt der Sendeoptik 12 um den halben Krümmungsradius R des Lineardiffusors 16 beabstandet ist. Der Abstand des mit punktierter Linie dargestellten Lineardiffusors 16.3 entspricht dem Krümmungsradius R und der Abstand des mit punktiertgestrichelter Linie dargestellten Lineardiffusors 16.4 dem 1,5-fachen des Krümmungsradius R.

In Fig. 11 sind die zu Fig. 10 korrespondierenden Winkelverteilungen für die unterschiedlichen Abstände des Lineardiffusors 16 von der Sendeoptik 12 bzw. deren Brennpunkt dargestellt, wobei die Linierungen dieser Winkelverteilungen den Linierungen der jeweiligen Darstellungen des Lineardiffusors 16.1. bis 16.4 entsprechen. Wie in Fig. 11 gut zu erkennen ist, weisen die Lichtlinien, die durch die auf der optischen Achse OA liegende Punktlichtquelle "0" erzeugt wurden, für alle Abstände einen geradlinigen Verlauf auf, entsprechend der mittigen Linie in Fig. 11.

Die für die beiden anderen Punktlichtquellen "+1", "-1" erzeugten Lichtlinien weisen für einen Abstand des Lineardiffusors 16.1 von 0 ebenfalls einen geradlinigen Verlauf auf. Für die weiter von der Sendeoptik 12 beabstandeten Lineardiffusoren 16.2 bis 16.4 nimmt die Krümmung der Lichtlinien mit zunehmendem Abstand zu und dementsprechend der Krümmungsradius dieser Lichtlinien ab.

Fig. 11 zeigt somit, dass durch die Wahl eines geeigneten Abstands und Krümmungsradius des Lineardiffusors 16 bzw. dessen Wirkzone ein Sendelinienmuster erzeugt werden kann, das entsprechend dem Ausführungsbeispiel von Fig. 10 eine tonnenförmige Verzeichnung aufweist.

Es versteht sich, dass die beispielhafte Anzahl von drei Punktlichtquellen 10 im Ausführungsbeispiel von Fig. 10 in geeigneter Weise erhöht werden kann, um eine Anpassung auf die Anzahl der bei einem zugeordneten Lichtempfänger vorhandenen Zeilen von lichtempfindlichen Elementen erfolgen kann.

Wie vorstehend mit Bezug auf Fig. 5 bis 7 erläutert wurde, hängt der Krümmungsradius der Lichtlinien des Sendelichtmusters unter anderem auch vom Neigungswinkel des Lineardiffusors 16 und damit vom jeweils wirksamen Auftreffwinkel der Sendelichtstrahlen auf die Wirkzone eines planen Lineardiffusors 16 ab. Aufgrund dieses Zusammenhangs zwischen dem Auftreffwinkel der Sendelichtstrahlen auf die Wirkzone des Lineardiffusors 16 und der dadurch erzielten Krümmung der Lichtlinien ist der Fachmann in der Lage, den Abstand und den Krümmungsradius R des Lineardiffusors bzw. der Wirkzone einer ggf. aus mehreren Lineardiffusoren zusammengesetzten Diffusoranordnung entsprechend dem gewünschten Krümmungsverlauf der Lichtlinien im Sendelichtmuster in geeigneter Weise auszuwählen, wobei dieser Auswahlprozess sowohl empirisch durch geeignete Versuche als auch rechnerisch erfolgen kann.

### Bezugszeichenliste

- 100, 200, 300, 400, 500: Beleuchtungseinrichtung

- 10: Punktlichtquelle
- 12: Sendeoptik
- 14: Sendelichtbündel
- 16, 16.1 - 16.4: Lineardiffusor

- OA: optische Achse

## Patentansprüche

1. Beleuchtungseinrichtung (200, 300, 400, 500) für einen optoelektronischer Sensor, welcher zum Erfassen von Objekten in einem Überwachungsbereich eingerichtet ist,
mit einer Lichtsenderanordnung, welche zum Aussenden von Sendelicht in den Überwachungsbereich eingerichtet ist und zumindest eine Lichtquelle (10) umfasst,
mit einer Sendeoptikanordnung, welche zumindest eine Sendeoptik (12) umfasst und zum Fokussieren des Sendelichts eingerichtet ist, und
mit einer Diffusoranordnung, welche zumindest einen Lineardiffusor (16) umfasst und dazu eingerichtet ist, das fokussierte Sendelicht in einer ersten Raumrichtung (X) zu streuen und in einer zweiten, zur ersten Raumrichtung orthogonalen, Raumrichtung (Y) zumindest im Wesentlichen ungestreut zu lassen,
wobei die Lichtsenderanordnung, die Sendeoptikanordnung und die Diffusoranordnung ausgebildet sind, ein auf einem im Überwachungsbereich anwesenden Objekt ein streifenförmiges Sendelichtmuster zu erzeugen, welches mehrere Lichtlinien umfasst,
**dadurch gekennzeichnet,**
**dass** eine Wirkzone der Diffusoranordnung eine Krümmung aufweist, welche derart ausgestaltet ist, dass ein Referenz-Sendelichtmuster, welches bei Erzeugung mittels einer Referenz-Diffusoranordnung mit planer Wirkzone im Winkelraum geradlinig verlaufende Lichtlinien umfassen würde, derart verzeichnet wird, dass die Lichtlinien im Winkelraum einen gekrümmten, verzeichneten Verlauf aufweisen.

2. Beleuchtungseinrichtung (200, 300, 400, 500) nach Anspruch 1,
**dadurch gekennzeichnet,**
**dass** die Krümmung der Wirkzone der Diffusoranordnung in nur einer Dimension verläuft, wobei die Krümmung in einer Ebene verläuft, die von einer durch die Lichtsenderanordnung, die Sendeoptikanordnung und die Diffusoranordnung verlaufenden optischen Achse (OA) der Beleuchtungseinrichtung (500) und der zweiten Raumrichtung (Y) aufgespannt wird.

3. Beleuchtungseinrichtung (200, 300, 400, 500) nach Anspruch 1 oder 2,
**dadurch gekennzeichnet,**
**dass** die Wirkzone der Diffusoranordnung bezogen auf ihre der Sendeoptikanordnung zugewandten Seite konkav gekrümmt ist.

4. Beleuchtungseinrichtung (200, 300, 400, 500) nach einem der vorhergehenden Ansprüche,
**dadurch gekennzeichnet,**
**dass** die Diffusoranordnung einen entsprechend der vorgesehenen Krümmung der Wirkzone der Diffusoranordnung gekrümmten Lineardiffusor (16) umfasst, oder
**dass** die Diffusoranordnung eine Mehrzahl von planen Lineardiffusoren (16) umfasst, welche entsprechend der vorgesehenen Krümmung der Wirkzone der Diffusoranordnung angeordnet und ausgerichtet sind.

5. Beleuchtungseinrichtung (200, 300, 400, 500) nach einem der vorhergehenden Ansprüche,
**dadurch gekennzeichnet,**
**dass** die Lichtsenderanordnung eine Mehrzahl von Lichtquellen (10) umfasst, welche in der zweiten Raumrichtung (Y) voneinander beabstandet angeordnet sind.

6. Beleuchtungseinrichtung (200, 300, 400, 500) nach Anspruch 5,
**dadurch gekennzeichnet,**
**dass** die Mehrzahl von Lichtquellen (10) sequenziell aktivierbar ist.

7. Beleuchtungseinrichtung (200, 300, 400, 500) nach Anspruch 6,
**dadurch gekennzeichnet,**
**dass** jeder der Lichtquellen (10) eine jeweilige Sendeoptik (12) zugeordnet ist.

8. Optoelektronischer Sensor zum Erfassen von Objekten in einem Überwachungsbereich,
mit einer Beleuchtungseinrichtung (500) nach einem der vorhergehenden Ansprüche, und
mit einer Empfangsanordnung, mit einem Lichtempfänger, welche eine Vielzahl von in Zeilen und Spalten angeordneten lichtempfindlichen Empfangselementen aufweist, und einer Empfangsoptik, welche zum Abbilden eines Sendelichtmusters, welches von der Beleuchtungseinrichtung (500) auf einem im Überwachungsbereich anwesenden Objekt erzeugt wurde, in ein Empfangslichtmuster auf dem Lichtempfänger eingerichtet ist, wobei der Lichtempfänger und die Empfangsoptik derart ausgestaltet und angeordnet sind, dass eine jeweilige Lichtlinie des Sendelichtmusters auf eine jeweilige Zeile des Lichtempfängers abgebildet wird.

9. Optoelektronischer Sensor nach Anspruch 8,
**dadurch gekennzeichnet,**
**dass** die Krümmung der Wirkzone der Diffusoranordnung und/oder der Abstand der Diffusoranordnung von der Sendeoptikanordnung derart gewählt sind, dass die durch die Diffusoranordnung bewirkte Verzeichnung des Sendelichtmusters einer durch die Empfangsoptik bewirkten Verzeichnung des Empfangslichtmusters entgegenwirkt.

10. Optoelektronischer Sensor nach Anspruch 8 oder 9,
**dadurch gekennzeichnet,**
**dass** eine Auswerteeinrichtung vorgesehen ist, welche mit der Lichtsenderanordnung und dem Lichtempfänger verbunden ist, wobei die Lichtsenderanordnung eine Mehrzahl von sequenziell durch die Auswerteeinheit aktivierbaren Lichtquellen (10) umfasst, welche in der zweiten Raumrichtung (Y) voneinander beabstandet angeordnet sind, wobei jeder Lichtquelle (10) eine entsprechenden Zeile des Lichtempfängers zugeordnet ist, wobei die Auswerteeinrichtung dazu eingerichtet ist, den Abstand eines Auftrefforts des Sendelichtmusters auf einer Oberfläche des Objekts auf der Grundlage der Lichtlaufzeit zwischen einer jeweils aktivierten Lichtquelle (10) und einem lichtempfindlichen Element der zugeordneten Zeile des Lichtempfängers ortsaufgelöst zu ermitteln.
